# EUROPÄISCHE PATENTSCHRIFT

(11) **EP 3 800 375 B1**
(45) Veröffentlichungstag und Bekanntmachung des Hinweises auf die Patenterteilung: **15.02.2023**
(21) Anmeldenummer: 19200799.5
(22) Anmeldetag: 01.10.2019
(51) Int. Cl.: F16H 55/17, F16H 55/06, F16H 55/02, B29D 15/00

(54) **ZAHNKRANZTRÄGERTEIL FÜR EIN ZWEI- ODER MEHRKOMPONENTEN-ZAHNRAD SOWIE ZWEI- ODER MEHRKOMPONENTEN-ZAHNRAD MIT EINEM DERARTIGEN ZAHNKRANZTRÄGERTEIL**
GEAR CRANE SUPPORT PART FOR A TWO-COMPONENT OR MULTI-COMPONENT TOOTHED WHEEL AND TWO-COMPONENT OR MULTI-COMPONENT TOOTHED WHEEL WITH SUCH A TOOTH-CRANE SUPPORT PART
PIÈCE DE SUPPORT DE COURONNE DENTÉE POUR UNE ROUE DENTÉE BI- OU MULTICOMPOSANT AINSI QUE ROUE DENTÉE BI- OU MULTICOMPOSANT DOTÉE D'UNE TELLE PIÈCE DE SUPPORT DE COURONNE DENTÉE

(43) Veröffentlichungstag der Anmeldung: 07.04.2021
(73) Patentinhaber: IMS Gear SE & Co. KGaA, 78166 Donaueschingen (DE)
(72) Erfinder: Stoppel, Eugen, 78357 Mühlingen (DE); Birk, Sebastian, 78647 Trossingen (DE); Melnikov, Egor, 78573 Wurmlingen (DE); Oberle, Stephan, 78050 Villingen-Schwenningen (DE)
(74) Vertreter: Westphal, Mussgnug & Partner Patentanwälte mbB

(56) Entgegenhaltungen:
- EP-A1- 3 459 706
- WO-A1-2019/121781
- DE-A1-102012 102 776
- US-A1- 2013 228 028

## Beschreibung

Die vorliegende Erfindung betrifft ein Zahnkranzträgerteil für ein Zwei- oder Mehrkomponenten-Zahnrad. Weiterhin betrifft die Erfindung ein Zwei- oder Mehrkomponenten-Zahnrad mit einem derartigen Zahnkranzträgerteil.

Mehrkomponenten-Zahnräder sind beispielsweise in der EP 2 899 430 A1 offenbart und zeichnen sich dadurch aus, dass sie aus zumindest zwei unterschiedlichen Materialien aufgebaut sind. Beispielsweise kann das Zahnkranzträgerteil, welches den Zahnkranz bildet, aus einem ersten Material gefertigt sein, während das übrige Zahnrad aus einem zweiten Material besteht. Einer der Vorteile dieser Ausgestaltung von Zwei- oder Mehrkomponenten-Zahnrädern ist, dass das Material entsprechend der an der Stelle des Zahnrads herrschenden Belastungen gewählt werden kann. Das Zahnkranzträgerteil mit dem Zahnkranz ist hohem Verschleiß und/oder hohen Kräften ausgesetzt, während auf das sich an den Zahnkranzträgerteil anschließende, mit diesem verbundene Teil, im Folgenden als Verbindungsteil bezeichnet, typischerweise hohe Dreh- und Kippmomente wirken, die abgefangen werden müssen. Ein Zweikomponenten-Zahnrad kann daher beispielsweise aus einem ersten Kunststoff und einem zweiten Kunststoff bestehen, wobei der ersten Kunststoff für das Zahnkranzträgerteil und der zweite Kunststoff für das Verbindungsteil verwendet werden. Für den ersten Kunststoff kann ein besonders verschleißbeständiger Kunststoff gewählt werden, während der zweite Kunststoff ein selbstverstärkender Kunststoff sein kann, der auch faserverstärkt sein kann.

Bei Dreikomponenten-Zahnrädern kann beispielsweise die Nabe von einem Einlegeteil gebildet werden, das aus Metall bestehen kann.

Bei Zwei- oder Mehrkomponenten-Zahnrädern muss sichergestellt sein, dass sich das Zahnkranzträgerteil und das Verbindungsteil nicht voneinander lösen können, auch nicht in Teilbereichen, und auch bei hohen Drehmomenten nicht gegeneinander verrutschen können. Weist das Zahnrad ein Einlegeteil auf, darf sich auch dieses nicht vom Verbindungsteil lösen oder gegenüber dem Verbindungsteil verrutschen. Folge dieses Lösens sind hohe Verformungen, welche ein verschlechtertes Laufverhalten der Verzahnung nach sich zieht. Weiterhin werden hierdurch erhöhte Zahnfußspannungen, Fehleingriffe, eine erhöhte Geräuschentwicklung im Betrieb sowie vorzeitige Schädigungen und Ausfälle verursacht.

Es ist daher beispielsweise aus der US 2014/007724 A1 bekannt, das Zahnkranzträgerteil und das Einlegeteil mit Vorsprüngen und Vertiefungen zu versehen, mit welchen das Verbindungsteil in Umfangsrichtung formschlüssig zusammenwirkt, wodurch einem Verrutschen entgegengewirkt werden kann. Weitere Zahnkranzträgerteile und Zwei- oder Mehrkomponenten-Zahnräder sind in der EP 3 459 706 A1, der DE 10 2012 102 776 A1, der WO 2019/121 781 A1 und der US 2013/228028 A1 offenbart. Das Dokument DE 10 2012 102776 A1 offenbart ein Zahnkranzträgerteil mit Rippen und Taschen.

Zwei- oder Mehrkomponenten-Zahnräder werden immer häufiger im Spritzguss hergestellt, was insbesondere dann der Fall ist, wenn die Zwei- oder Mehrkomponenten-Zahnräder ganz oder teilweise aus Kunststoff bestehen. In der US 2014/007724 A1 sind zwei häufig verwendete Spritzgussverfahren dargestellt, nämlich zum einen das Schirmangussverfahren und zum anderen das Punktanguss-Verfahren. Mit diesen beiden Verfahren kann das Zahnkranzträgerteil gespritzt werden. Aufgrund der Vorsprünge und Vertiefungen des Zahnkranzträgerteils ist der Strömungsweg des verwendeten und beim Einspritzen flüssigen Materials beim Einspritzen in die Spritzgussform insofern ungünstig, als dass das Material einige Stellen innerhalb der Spritzgussform deutlich später erreicht als benachbarte Stellen. Infolgedessen bilden sich Überströmkanäle aus und das Material kühlt später ab als an den benachbarten Stellen. Das fertige Zahnkranzträgerteil weist daher Inhomogenitäten, Bindenähte, Lufteinschlüsse und Verbrennungen auf, wodurch die maximale Belastbarkeit von Zahnrädern, welche derartige Zahnkranzträgerteile aufweisen, begrenzt wird. Weiterhin treten insbesondere aufgrund der nicht optimalen Strömungswege hohe Belastungen des Materials auf. Um dennoch eine akzeptable Teilequalität zu erzielen, werden übermäßig hohe Nachdrücke gefahren, was zur Folge hat, dass das Material und das Werkzeug übermäßig hoch belastet werden und Spritzgusswerkzeuge und Maschinen entsprechend größer ausgelegt bzw. gewählt werden müssen.

Um dennoch die maximale Belastbarkeit von spritzgegossenen Zwei- oder Mehrkomponenten-Zahnrädern auf das gewünschte Maß heben zu können, werden die Wandstärken des Zahnkranzträgerteils entsprechend groß gewählt, was aber zu einem erhöhten Materialverbrauch und zu langen Prozess-Zykluszeiten führt. Zudem müssen die für den Anguss verwendeten Spritzgusswerkzeuge ebenfalls größer und mit entsprechend großen Wandstärken ausgelegt werden, obwohl diese Wandstärken für die eigentliche Funktion nicht benötigt werden. Das nach erfolgtem Anguss zu entfernende Volumen steigt entsprechend an.

Auch wird über eine erhöhte Spritzgusswerkzeug-Temperatur versucht, das Strömungsverhalten zu verbessern, was aber zu einem erhöhten Energieverbrauch und einer erhöhten thermischen Belastung des Spritzgusswerkzeugs führt.

Aufgabe der vorliegenden Erfindung ist es, ein Zahnkranzträgerteil anzugeben, welches so gefertigt werden kann, dass es geringere Inhomogenitäten aufweist und daher im Vergleich zu bekannten und vergleichbaren Zahnkranzträgerteilen höher belastbar ist. Des Weiteren liegt einer Ausgestaltung der vorliegenden Erfindung die Aufgabe zugrunde, ein Zwei- oder Mehrkomponenten-Zahnrad zu schaffen, welches ein höher belastbares Zahnkranzträgerteil aufweist.

Diese Aufgabe wird mit den in dem Anspruch 1 angegebenen Merkmalen gelöst. Vorteilhafte Ausführungsformen sind Gegenstand der Unteransprüche.

Die Erfindung betrifft ein Zahnkranzträgerteil für ein Zwei- oder Mehrkomponenten-Zahnrad, wobei
- das Zahnkranzträgerteil
   ∘ einen in Umfangsrichtung um eine Drehachse umlaufenden Kreisringabschnitt,
   ∘ einen radial außen am Kreisringabschnitt angeordneten Zahnkranz,
   ∘ einen sich vom Kreisringabschnitt radial nach innen erstreckenden Fortsatz, und
- der Fortsatz
   ∘ eine erste Fortsatz-Stirnfläche und eine zweite Fortsatz-Stirnfläche aufweist,
   ∘ auf der ersten Fortsatz-Stirnfläche eine Anzahl von ersten Rippen und eine gleiche Anzahl von ersten Taschen, und/oder
   o auf der zweiten Fortsatz-Stirnfläche eine Anzahl von zweiten Rippen und eine gleiche Anzahl von zweiten Taschen angeordnet sind, wobei
   o die ersten Rippen und die ersten Taschen und/oder die zweiten Rippen und die zweiten Taschen jeweils radial verlaufen und in Umfangsrichtung benachbart zueinander angeordnet sind.

Das Zahnkranzträgerteil kann in den Kreisringabschnitt und den Fortsatz unterteilt werden, wobei diese stofflich zusammenhängen. Insofern ist diese Unterteilung vorwiegend gedanklich zu sehen. Der Zahnkranz geht vom Kreisringabschnitt radial nach außen aus. Der Fortsatz geht vom Kreisringabschnitt aus und erstreckt sich radial nach innen zur Drehachse hin. Der Fortsatz bildet die erste Fortsatz-Stirnfläche und die zweite Fortsatz-Stirnfläche. Auf der ersten Fortsatz-Stirnfläche sind die ersten Rippen und die ersten Taschen und auf der zweiten Fortsatz-Stirnfläche die zweiten Rippen und die zweiten Taschen angeordnet. Da auch hier der Fortsatz, die Rippen und die Taschen stofflich zusammenhängen, bilden die Oberflächen der Rippen und der Taschen einen Teil der Fortsatz-Stirnflächen.

Die Rippen und die Taschen sind radial ausgerichtet, verlaufen also ausgehend von der Drehachse zum Zahnkranzträgerteil hin. Im fertig gestellten Zwei- oder Mehrkomponenten-Zahnrad stellen die radial verlaufenden Rippen und Taschen einen in Umfangsrichtung wirkenden Formschluss zwischen dem Zahnkranzträgerteil und dem mit dem Zahnkranzträgerteil verbundenen Bauteil des Zwei- oder Mehrkomponenten-Zahnrads bereit, so dass das zwischen dem Zahnkranzträgerteil und dem hiermit verbundenen Bauteil übertragbare Drehmoment gegenüber bekannten Zweioder Mehrkomponenten-Zahnrädern erhöht wird.

Aufgrund der vorschlagsgemäßen Gestaltung des Fortsatzes ergibt sich für das beim Einspritzen flüssige Material ein Strömungsweg, der zu einer deutlich gleichmäßigeren Befüllung der Spritzgussform führt als es bei Zahnkranzträgerteilen der Fall ist, die beispielsweise aus der US 2014/007724 A1 bekannt sind. Folglich wird die Ausbildung von Überströmkanälen reduziert und es wird die Homogenität des vorschlagsgemäßen Zahnkranzträgerteils erhöht. Die Belastbarkeit des vorschlagsgemäßen Zahnkranzträgerteiles wird gegenüber bekannten, vergleichbaren Zahnkranzträgerteilen erhöht.

Erfindungsgemäß bilden die ersten Rippen und die ersten Taschen und/oder die zweiten Rippen und die zweiten Taschen mit dem Kreisringabschnitt jeweils einen wellenförmigen Übergang. Unter dem wellenförmigen Übergang soll ein kontinuierlicher Übergang ohne Stufen, Kanten oder engen Radien verstanden werden. Dieser wellenförmige Übergang begünstigt den Strömungsweg des beim Einspritzen flüssigen Materials, insbesondere des verwendeten Kunststoffs, so dass die Bildung der oben erwähnten Inhomogenitäten, Bindenähte, Lufteinschlüsse und Verbrennungen vermieden oder zumindest deutlich verringert wird. Darüber hinaus wird die Ausbildung von Spannungsspitzen bei Belastungen vermieden.

In einer weitergebildeten Ausführungsform kann auf dem Zahnkranz eine Anzahl von Zähnen angeordnet sein, die gleich der Anzahl der ersten und zweiten Rippen sowie der Anzahl der ersten Taschen und zweiten Taschen ist. Wenn man eine Rippe und eine Tasche gedanklich zu einer Mitnahmeeinheit zusammenfasst, ist pro Zahn eine Mitnahmeeinheit vorhanden. Alternativ kann die Anzahl der Zähne ein Vielfaches, insbesondere ein ganzzahliges Vielfaches, sein und beispielsweise doppelt oder dreifach so hoch sein wie die Anzahl der der ersten und zweiten Rippen sowie die Anzahl der ersten Taschen und zweiten Taschen. Die Anzahl der Zähne kann aber auch geringer sein als die Anzahl der der ersten und zweiten Rippen sowie die Anzahl der ersten Taschen und zweiten Taschen, beispielsweise die Hälfte oder ein Viertel.

Es hat sich herausgestellt, dass in dieser Ausführungsform der Kraft- und Spannungsverlauf innerhalb des Zahnkranzträgerteils besonders günstig ist, so dass die übertragbaren Kräfte und Drehmomente gegenüber bekannten, vergleichbaren Zahnkranzträgerteilen erhöht werden können.

Bei einer weitergebildeten Ausführungsform können
- jeder Zahn des Zahnkranzes jeweils einen Zahnfuß und einen Zahnkopf bilden und
- die ersten und zweiten Rippen fluchtend zu den Zahnfüßen und die ersten und zweiten Taschen fluchtend zu den Zahnköpfen, oder
- die ersten und zweiten Rippen fluchtend zu den Zahnköpfen und die ersten und zweiten Taschen fluchtend zu den Zahnfüßen angeordnet sein.

In dieser Ausführungsform lassen sich die Kraft- und Spannungsverläufe innerhalb des Zahnkranzträgerteils weiter erhöhen, so dass die übertragbaren Kräfte und Drehmomente gegenüber bekannten, vergleichbaren Zahnkranzträgerteilen nochmals erhöht werden können.

Bei einer weiteren Ausführungsform können
- auf der ersten Fortsatz-Stirnfläche zumindest eine ringförmige erste Wandung, welche die ersten Rippen und die ersten Taschen in jeweils einen radial inneren Abschnitt und jeweils einen radial äußeren Abschnitt unterteilt und/oder
- auf der zweiten Fortsatz-Stirnfläche zumindest eine ringförmige zweite Wandung angeordnet sein, welche die zweiten Rippen und die zweiten Taschen in jeweils einen radial inneren Abschnitt und jeweils einen radial äußeren Abschnitt unterteilt.

Die ringförmige erste Wandung und die ringförmige zweite Wandung sind im Wesentlichen konzentrisch zur Drehachse angeordnet. Im fertig gestellten Zwei- oder Mehrkomponenten-Zahnrad stellen die Wandungen einen in radialer Richtung wirkenden Formschluss zwischen dem Zahnkranzträgerteil und dem mit dem Zahnkranzträgerteil verbundenen Bauteil des Zwei- oder Mehrkomponenten-Zahnrads bereit. Insbesondere dann, wenn der Zahnkranz so ausgebildet ist, dass eine Schrägverzahnung vorliegt, werden auch entlang der Drehachse wirkende Kräfte vom Zahnrad, mit welchem das Zwei- oder Mehrkomponenten-Zahnrad in kämmenden Eingriff steht, in den Zahnkranz eingebracht. Hierdurch wirkt ein Drehmoment, welches das Zahnkranzträgerteil so verformt, dass es sich vom verbundenen Bauteil ablösen könnte. Es ist auch möglich, dass über den kämmenden Eingriff zur Drehachse hin wirkende Radialkräfte in das Zahnkranzträgerteil eingeleitet werden. Hierdurch wird das Zahnkranzträgerteil aus der Kreisform hin zu einer elliptischen Form verformt, wodurch es ebenfalls zu einem Ablösen vom verbundenen Bauteil kommen könnte.

Die Wandung stellt eine Hinterschneidung bereit, so dass ein in radialer Richtung wirkender Formschluss zwischen dem Zahnkranzträgerteil und dem verbundenen Bauteil vorliegt. Aufgrund des in radialer Richtung wirkenden Formschlusses wird diesem Ablösen entgegengewirkt.

Eine weitergebildete Ausführungsform zeichnet sich dadurch aus, dass
- die erste Wandung erste Vertiefungen aufweist, welche fluchtend mit den ersten Taschen angeordnet sind und/oder
- die zweite Wandung zweite Vertiefungen aufweist, welche fluchtend mit den ersten Taschen angeordnet sind.

In dieser Ausführungsform folgt die Wandung in etwa der Form der Rippen und Taschen. Mit anderen Worten wird in dieser Ausführungsform die Höhe der Wandung ausgehend von den Rippen und den Taschen zu dem freien Ende der Wandung hin in etwa konstant gehalten. Die Bildung von Bindenähten wird verringert, was sich positiv auf die Belastbarkeit des Zahnkranzträgerteils auswirkt.

Nach Maßgabe einer weiteren Ausführungsform
- weist der Zahnkranz eine erste Zahnkranz-Stirnfläche und eine zweite Zahnkranz-Stirnfläche auf, die in einem ersten Abstand voneinander angeordnet sind, und
- die erste Fortsatz-Stirnfläche und die zweite Fortsatz-Stirnfläche sind in einem zweiten Abstand voneinander angeordnet sind,
- wobei das Verhältnis 1 < A1/A2 < 10, insbesondere 2 < A1/A2 < 5 beträgt.

Damit das mit dem Zahnkranzträgerteil verbundene Bauteil den Fortsatz im fertiggestellten Zustand des Zwei- oder Mehrkomponenten-Zahnrads umschließen kann, muss der zweite Abstand geringer sein als der erste Abstand. Insofern muss gewährleistet sein, dass das Verhältnis von erstem Abstand A1 zu zweitem Abstand A2 größer 1 ist. Um jedoch ein ausreichendes Flächenträgheitsmoment und folglich eine ausreichende Stabilität gegen Verformung infolge von axial und radial einwirkenden Kräften bereitstellen zu können, sollte der erste Abstand nicht zu viel größer sein als der zweite Abstand.

Gemäß einer weiteren Ausführungsform weisen
- die ersten Vertiefungen eine erste Vertiefungsstirnfläche und
- die zweiten Vertiefungen eine zweite Vertiefungsstirnfläche auf, wobei
- die erste Vertiefungsstirnfläche und die zweite Vertiefungsstirnfläche in einem fünften Abstand A5 voneinander beabstandet sind, wobei
- A5 ≥ A2.

Wie erwähnt, wird mit den Vertiefungen erreicht, dass die Wandung in etwa der Form der Rippen und Taschen folgt. Bei dem angegebenen Verhältnis von A5 ≥ A2 wird die Bildung von Bindenähten besonders wirkungsvoll verringert, was sich positiv auf die Belastbarkeit des Zahnkranzträgerteils auswirkt.

Bei einer fortentwickelten Ausführungsform weisen die ersten Taschen im radial äußeren Abschnitt eine erste Taschengrundfläche und die zweiten Taschen im radial äußeren Abschnitt eine zweite Taschengrundfläche auf, die im einem sechsten Abstand A6 voneinander angeordnet sind, wobei A2 ≥ A6.

In dieser Ausführungsform ragen die Taschen im radial äußeren Abschnitt besonders tief in den Fortsatz hinein, so dass für den bereits erwähnten in Umfangsrichtung wirkenden Formschluss mit dem Verbindungsteil besonders viel Volumen zur Verfügung steht, so dass in dieser Ausführungsform große Drehmomente zwischen dem Zahnkranzträgerteil und dem Verbindungsteil übertragen werden können.

Gemäß einer weiteren Ausführungsform weisen die ersten Taschen im inneren äußeren Abschnitt eine erste innere Taschengrundfläche und die zweiten Taschen im radial inneren Abschnitt eine zweite innere Taschengrundfläche auf, die in einem siebten Abstand voneinander angeordnet sind, wobei A2 ≥ A7.

Wie eingangs erwähnt, bietet es sich an, das Zahnrad im Schirmangussverfahren herzustellen. Der Fortsatz hängt direkt mit dem Anguss-Schirm zusammen, so dass in dieser Ausführungsform der Abstand A7 im Wesentlichen der Dicke des Anguss-Schirms entspricht. Dadurch, dass A7 kleiner ist als oder gleich A2 ist, kann die Masse des Fortsatzes gering gehalten werden. Dadurch, dass nach dem Spritzen der überstehende Teil des Materials im Anguss-Schirm mechanisch entfernt werden muss, wird der Abfall verringert, was in dieser Ausführungsform besonders umfangreich gelingt. Üblicherweise wird der überstehende Teil des Anguss-Schirms abgedreht. Wird A7 besonders gering gewählt, kann ein kostengünstigerer Entfernungsprozess, beispielsweise Stanzen, verwendet werden. Darüber hinaus lässt sich bei einem geringen A7 die Zykluszeit des Herstellungsprozesses verringern, da das Zahnkranzträgerteil schneller und gleichmäßiger abkühlen kann.

Eine weitere Ausführungsform zeichnet sich dadurch aus, dass
- der Zahnkranz einen Fußkreisdurchmesser aufweist und
- der Fortsatz eine zur Drehachse hinweisende Innenfläche mit einem Innenflächendurchmesser aufweist,
- wobei das Verhältnis von Fußkreisdurchmesser zu Innenflächendurchmesser Df/Di größer 1 beträgt.

Das Verhältnis von Fußkreisdurchmesser zu Innenflächendurchmesser Df/Di kann insbesondere mit einer Verringerung des Innenflächendurchmessers Di vergrößert werden. Je weiter sich der Fortsatz ausgehend vom Kreisringabschnitt zur Drehachse hin erstreckt, desto kleiner wird der Innenflächendurchmesser Di und desto größer wird das Verhältnis von Fußkreisdurchmesser zu Innenflächendurchmesser Df/Di. Mit steigendem Verhältnis von Fußkreisdurchmesser zu Innenflächendurchmesser Df/Di wird das Flächenträgheitsmoment und folglich eine ausreichende Stabilität gegen Verformung infolge von axial und radial einwirkenden Kräften erhöht.

Nach Maßgabe einer weiteren Ausführungsform
- weist der Kreisringabschnitt eine erste Kreisringabschnitt-Stirnfläche und eine zweite Kreisringabschnitt-Stirnfläche auf, wobei
- auf der ersten Kreisringabschnitt-Stirnfläche zumindest eine erste Kreisringabschnitt-Tasche, und/oder
- auf der zweiten Kreisringabschnitt-Stirnfläche zumindest eine zweite Kreisringabschnitt-Tasche angeordnet ist.

Die erste Kreisringabschnitt-Tasche und die zweite Kreisringabschnitt-Tasche müssen nicht notwendigerweise unterbrechungsfrei und voll umlaufend sein. Es können auch mehrere erste Kreisringabschnitt-Taschen und mehrere zweite Kreisringabschnitt-Taschen vorgesehen sein. Anstelle der ersten Kreisringabschnitt-Taschen und/oder der zweite Kreisringabschnitt-Taschen können auch erste Kreisringabschnitt-Vorsprünge und zweite Kreisringabschnitt-Vorsprünge vorgesehen sein.

In dieser Ausführungsform wird radial außen eine in radialer Richtung wirkende Hinterschneidung erzeugt, welche dem Ablösen in besonders effektiver Weise entgegenwirkt, wenn das Zweioder Mehrkomponenten-Zahnrad fertiggestellt ist.

Gemäß einer weitergebildeten Ausführungsform sind die erste Kreisringabschnitt-Tasche und/oder die zweite Kreisringabschnitt-Tasche ringförmig ausgestaltet und weisen einen gleichbleibenden Durchmesser oder einen wellenförmigen Verlauf auf. Bei der ringförmigen Ausgestaltung ist das Formwerkzeug etwas einfacher herzustellen, während beim wellenförmigen Verlauf die Hinterschneidung teilweise auch in Umfangsrichtung wirkt.

Bei einer fortgebildeten Ausführungsform ist vorgesehen, dass die erste Kreisringabschnitt-Tasche einen wellenförmigen Verlauf aufweist und zumindest abschnittsweise in der ersten Zahnkranz-Stirnfläche verläuft und/oder die zweite Kreisringabschnitt-Tasche einen wellenförmigen Verlauf aufweist und zumindest abschnittsweise in der zweiten Zahnkranz-Stirnfläche verläuft. In dieser Ausführungsform können die erste Kreisringabschnitt-Taschen und/oder die zweite Kreisringabschnitt-Tasche sehr weit radial nach außen bis in die Zähne hinein gelegt werden, so dass dem Ablösen besonders wirkungsvoll entgegengewirkt werden kann, wenn das Zwei- oder Mehrkomponenten-Zahnrad fertiggestellt ist.

Gemäß einer fortgebildeten Ausführungsform sind die erste Wandung und die zweite Wandung in einem dritten Abstand voneinander angeordnet und die erste Kreisringabschnitt-Stirnfläche und die zweite Kreisringabschnitt-Stirnfläche in einem vierten Abstand voneinander angeordnet, wobei der erste Abstand größer als der dritte Abstand und/oder der vierte Abstand größer als der zweite Abstand sind. In dieser Ausführungsform ist das fertig gestellte Zwei- oder Mehrkomponenten-Zahnrad besonders steif, so dass die Verformungen im Betrieb gering gehalten werden können. Entsprechend kann einem Durchrutschen und einem Ablösen wirkungsvoll begegnet werden.

Eine Ausgestaltung der Erfindung betrifft ein Zwei- oder Mehrkomponenten-Zahnrad, umfassend
- ein Zahnkranzträgerteil nach einem der vorherigen Ausführungsformen, und
- ein formschlüssig mit dem Zahnkranzträgerteil verbundenes Verbindungsteil, wobei das Verbindungsteil
   o den Fortsatz oder
   o den Fortsatz und den Kreisringabschnitt umschließt, oder
   o den Fortsatz und den Kreisringabschnitt und den Zahnkranz im Bereich der ersten Kreisringabschnitt-Stirnfläche und der zweiten Kreisringabschnitt-Stirnfläche sowie der ersten Kreisringabschnitt-Tasche und der zweiten Kreisringabschnitt-Tasche umschließt.

Die technischen Effekte und Vorteile, die sich mit dem vorschlagsgemäßen Zwei- oder Mehrkomponenten-Zahnrad erreichen lassen, entsprechen denjenigen, die für das vorliegende Zahnkranzträgerteil erörtert worden sind. Zusammenfassend sei darauf hingewiesen, dass sich aufgrund der vorschlagsgemäßen Gestaltung des Fortsatzes für das beim Einspritzen flüssige Material ein Strömungsweg ergibt, der zu einer deutlich gleichmäßigeren Befüllung der Spritzgussform führt als es bei Zahnkranzträgerteilen der Fall ist, die beispielsweise aus der US 2014/007724 A1 bekannt sind. Folglich wird die Ausbildung von Überströmkanälen reduziert und es wird die Homogenität des vorschlagsgemäßen Zahnkranzträgerteils erhöht. Zudem bilden die radial ausgerichteten Rippen und Taschen des Zahnkranzträgerteils einen in Umfangsrichtung wirkenden Formschluss mit dem Verbindungsteil, so dass das zwischen dem Zahnkranzträgerteil und dem Verbindungsteil übertragbare Drehmoment gegenüber bekannten Zwei- oder Mehrkomponenten-Zahnrädern vergrößert wird.

Diese technischen Effekte und Vorteile kommen insbesondere dann zum Tragen, wenn das Zahnkranzträgerteil aus einem ersten Kunststoff und das Verbindungsteil aus einem zweiten Kunststoff gefertigt sind. Der erste Kunststoff kann ein Hochleistungsthermoplast oder ein technischer Thermoplast sein, während der zweite Kunststoff ein Hochleistungsthermoplast, ein technischer Thermoplast oder ein Duroplast sein kann. Es bietet sich an, den zweiten Kunststoff, aus dem das Verbindungsteil gefertigt ist, faserverstärkt auszuführen, um eine besonders hohe axiale Steifigkeit zu erreichen, was insbesondere bei Schrägverzahnungen anzustreben ist.

Insbesondere dann, wenn das Verbindungsteil den Fortsatz und den Kreisringabschnitt umschließt, kann das Verbindungsteil das Zahnkranzträgerteil in radialer Richtung sehr weitreichend umschließen. Hierdurch können die Verformungen im Betrieb besonders gering gehalten werden. Entsprechend kann einem Durchrutschen und einem Ablösen wirkungsvoll begegnet werden. Hierzu ist es besonders günstig, wenn das Verbindungsteil den Fortsatz und den Kreisringabschnitt im Bereich der ersten Kreisringabschnitt-Stirnfläche und der zweiten Kreisringabschnitt-Stirnfläche sowie der ersten Kreisringabschnitt-Tasche und der zweiten Kreisringabschnitt-Tasche umschließt

Eine fortgebildete Ausgestaltung zeichnet sich dadurch aus, dass das Zwei- oder Mehrkomponenten-Zahnrad als ein Stirnrad, als ein Schraubrad oder als ein Schneckenrad ausgestaltet ist.

Wenn das Zwei- oder Mehrkomponenten-Zahnrad als ein Stirnrad ausgestaltet ist, kann es in vielen Anwendungen zum Einsatz kommen, insbesondere in Stirnradgetrieben, die weite Verbreitung finden. Die Ausgestaltung des vorschlagsgemäßen Zwei- oder Mehrkomponenten-Zahnrad ist aber nicht auf ein Stirnrad begrenzt. Das vorschlagsgemäße Zwei- oder Mehrkomponenten-Zahnrad kann auch als Schraubrad oder Schneckenrad ausgebildet sein, so dass dieses in einem Schraubradgetriebe oder einem Schneckengetriebe eingesetzt werden kann. Schraubradgetriebe und Schneckengetriebe werden beispielsweise in elektromechanischen Antrieben von Lenkungen (EPS, *"electric power steering*") eingesetzt.

Nach Maßgabe einer weiterentwickelten Ausgestaltung umfasst das Zwei- oder Mehrkomponenten-Zahnrad ein Einlegeteil, welches mit dem Verbindungsteil verbunden ist und vom Verbindungsteil umschlossen wird. Das Einlegeteil kann zum Ausbilden einer Wellen-Nabenverbindung verwendet werden. Während das Zahnkranzträgerteil und das Verbindungsteil wie erwähnt aus einem ersten Kunststoff bzw. einen zweiten Kunststoff gefertigt sein können, bietet es sich für die Ausbildung einer hoch belastbaren Wellen-Naben-Verbindung an, das Einlegeteil aus Metall zu fertigen. Das Einlegeteil kann eine Welle, eine Nabe, ein Kugellager oder dergleichen sein.

Beispielhafte Ausführungsformen werden im Folgenden unter Bezugnahme auf die beigefügten Zeichnungen näher erläutert. Es zeigen
- Figur 1A bis 1C: verschiedene Darstellungen eines ersten Ausführungsbeispiels eines Zahnkranzträgerteils,
- Figur 2A bis 2F: verschiedene Darstellungen eines zweiten Ausführungsbeispiels eines Zahnkranzträgerteils,
- Figur 3A bis 3C: verschiedene Darstellungen eines dritten Ausführungsbeispiels eines Zahnkranzträgerteils,
- Figur 4A bis 4C: verschiedene Darstellungen eines vierten Ausführungsbeispiels eines Zahnkranzträgerteils,
- Figur 5A bis 5C: verschiedene Darstellungen eines fünften Ausführungsbeispiels eines Zahnkranzträgerteils,
- Figur 6A bis 6C: verschiedene Darstellungen eines sechsten Ausführungsbeispiels eines Zahnkranzträgerteils,
- Figur 7: eine Schnittdarstellung eines siebten Ausführungsbeispiels eines Zahnkranzträgerteils,
- Figur 8: eine Schnittdarstellung eines achten Ausführungsbeispiels eines Zahnkranzträgerteils,
- Figur 9: eine ausschnittsweise Draufsicht auf ein neuntes Ausführungsbeispiel eines erfindungsgemäßen Zahnkranzträgerteils, und
- Figur 10: eine Seitenansicht auf ein Mehrkomponenten-Zahnrad, welches als ein Stirnrad ausgestaltet ist.

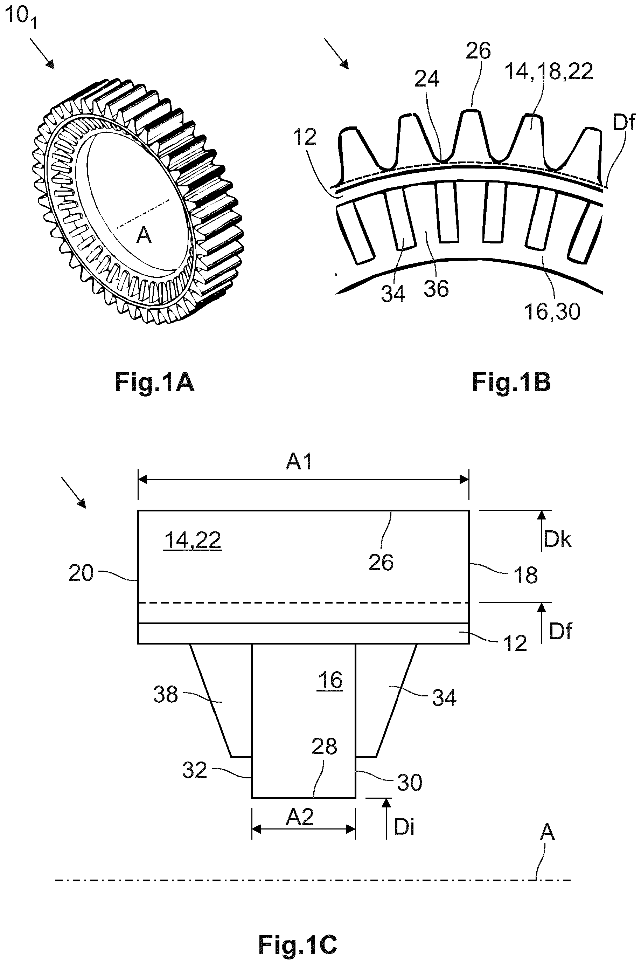

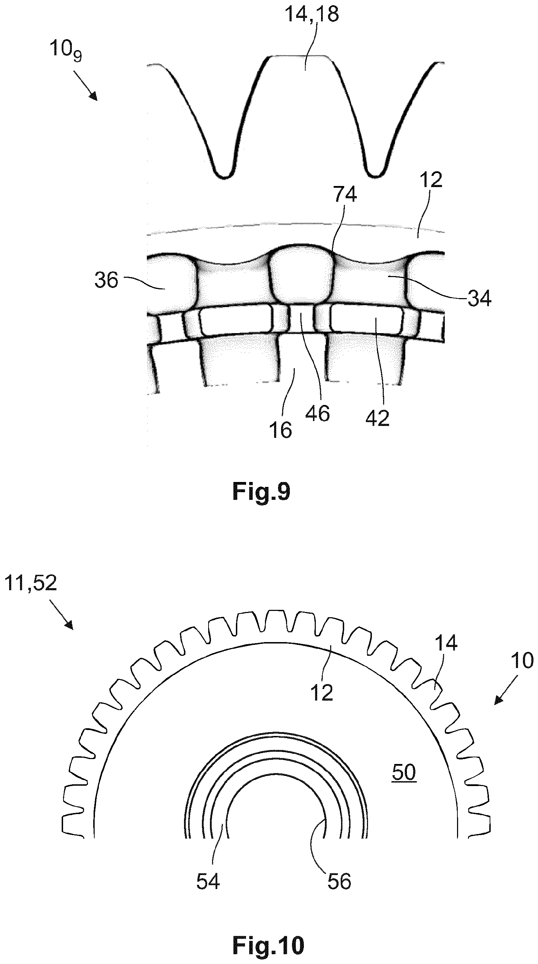

In den Figuren 1A bis 1C ist ein erstes Ausführungsbeispiel eines Zahnkranzträgerteils 10₁ jeweils anhand von verschiedenen Darstellungen gezeigt, welches für ein Zweikomponenten-Zahnrad (nicht dargestellt) oder ein Mehrkomponenten-Zahnrad 11 verwendet werden kann (siehe Figur 9). Das Zwei- oder Mehrkomponenten-Zahnrad 11 ist konzentrisch zu einer Drehachse A angeordnet, um welche sich das Zwei- oder Mehrkomponenten-Zahnrad 11 drehen kann. Die Schnittebene der Schnittdarstellung der Figur 1C verläuft durch die Drehachse A.

Das Zahnkranzträgerteil 10₁ nach dem in den Figuren 1A bis 1C dargestellten ersten Ausführungsbeispiel umfasst einen Kreisringabschnitt 12, der in Umfangsrichtung ringförmig um die Drehachse A verläuft. Radial außen bildet der Kreisringabschnitt 12 einen Zahnkranz 14, mit welchem das Zahnkranzträgerteil 10₁ bzw. das mit dem Zahnkranzträgerteil 10₁ versehene Zwei- oder Mehrkomponenten-Zahnrad 11 mit einem hier nicht dargestellten Zahnrad in kämmendem Eingriff gebracht werden kann. Je nach Ausgestaltung kann das Zwei- oder Mehrkomponenten-Zahnrad 11 als Stirnrad 52 (siehe Figur 9), Schraubrad oder Schneckenrad (nicht dargestellt) ausgebildet sein und mit einem entsprechend gestalteten Zahnrad in Eingriff gebracht werden.

Der Zahnkranz 14 weist eine erste Zahnkranz-Stirnfläche 18 und eine zweite Zahnkranz-Stirnfläche 20 auf, die in einem ersten Abstand A1 entlang der Drehachse A voneinander beabstandet angeordnet sind (Figur 1C). Der Zahnkranz 14 bildet eine Anzahl von Zähnen 22, welche einen Zahnfuß 24 und einen Zahnkopf 26 aufweisen. Am Zahnkopf 26 weist das Zahnkranzträgerteil 10₁ einen Kopfkreisdurchmesser Dk und am Zahnfuß 24 einen Fußkreisdurchmesser Df auf.

Das Zahnkranzträgerteil 10₁ weist ferner einen Fortsatz 16 auf, der sich ausgehend vom Ringabschnitt 12 radial nach innen zur Drehachse A hin erstreckt und eine zur Drehachse A hinweisende Innenfläche 28 bildet. Die Innenfläche 28 verläuft auf einem Innenflächendurchmesser Di um die Drehachse A.

Weiterhin weist der Fortsatz 16 eine erste Fortsatz-Stirnfläche 30 und eine zweite Fortsatz-Stirnfläche 32 auf, die in einem zweiten Abstand A2 entlang der Drehachse A beabstandet voneinander angeordnet sind.

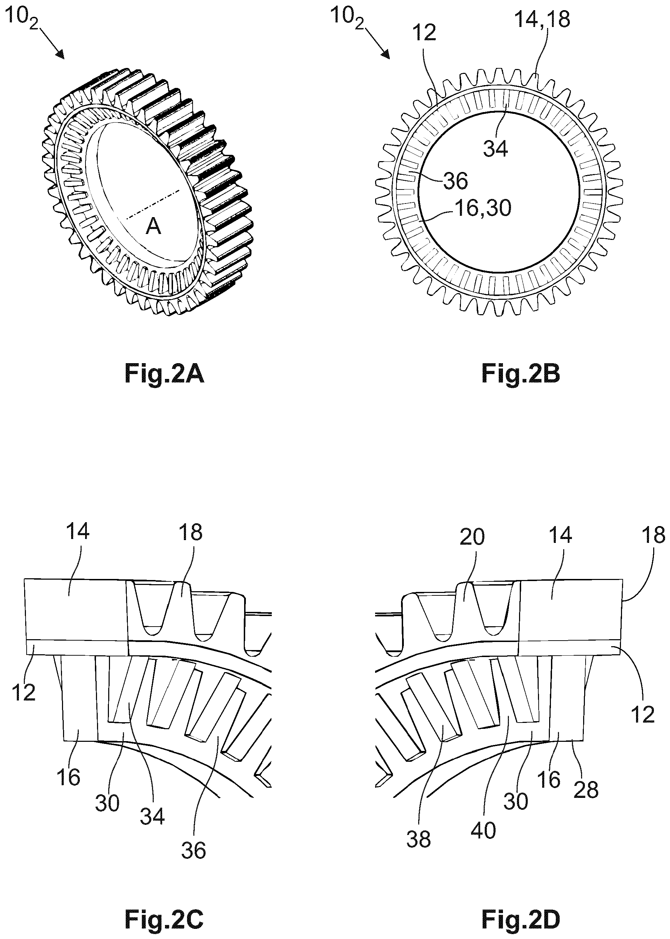

Wie insbesondere in den Figuren 1B und 1C erkennbar, umfasst das Zahnkranzträgerteil 10₁ eine Anzahl von ersten Rippen 34 und von ersten Taschen 36, die auf der ersten Fortsatz-Stirnfläche 30 angeordnet sind oder einen Teil der ersten Fortsatz-Stirnfläche 30 bilden. Zudem umfasst das Zahnkranzträgerteil 10₁ eine Anzahl von zweiten Rippen 38 und von zweiten Taschen 40, die auf der zweiten Fortsatz-Stirnfläche 32 angeordnet sind oder einen Teil der zweiten Fortsatz-Stirnfläche 32 bilden (vgl. Figuren 2C und 2D). Die ersten Rippen 34, die zweiten Rippen 38, die ersten Taschen 36 und die zweiten Taschen 40 erstrecken sich in radialer Richtung und sind gleichmäßig über den Umfang des Zahnkranzträgerteils verteilt. In Umfangsrichtung gesehen ist eine Rippe 34, 38 benachbart zu einer Tasche 36, 40 angeordnet. Die Anzahl der Zähne 22 entspricht dabei der Anzahl der ersten Rippen 34, der ersten Taschen 36, der zweiten Rippen 38 und der zweiten Taschen 40.

Wie erwähnt, sind die erste Zahnkranz-Stirnfläche 18 und die zweite Zahnkranz-Stirnfläche 20 in einem ersten Abstand A1 voneinander angeordnet. Die erste Fortsatz-Stirnfläche 30 und die zweite Fortsatz-Stirnfläche 32 sind in einem zweiten Abstand A2 voneinander angeordnet. In den dargestellten Ausführungsbeispielen gilt für das Verhältnis A1/A2 folgende Beziehung: 1 < A1/A2 < 10, vorzugsweise 1 < A1/A2 < 5.

Wie ebenfalls erwähnt, weist der Zahnkranz 14 einen Kopfkreisdurchmesser Dk und einen Fußkreisdurchmesser Df sowie der Fortsatz 16 eine zur Drehachse A hinweisende Innenfläche 28 mit einem Innenflächendurchmesser Di auf. In den dargestellten Ausführungsbeispielen liegt das Verhältnis Dk/Di in etwa bei 1,5. Das Verhältnis Df/Di liegt in etwa bei 1,3.

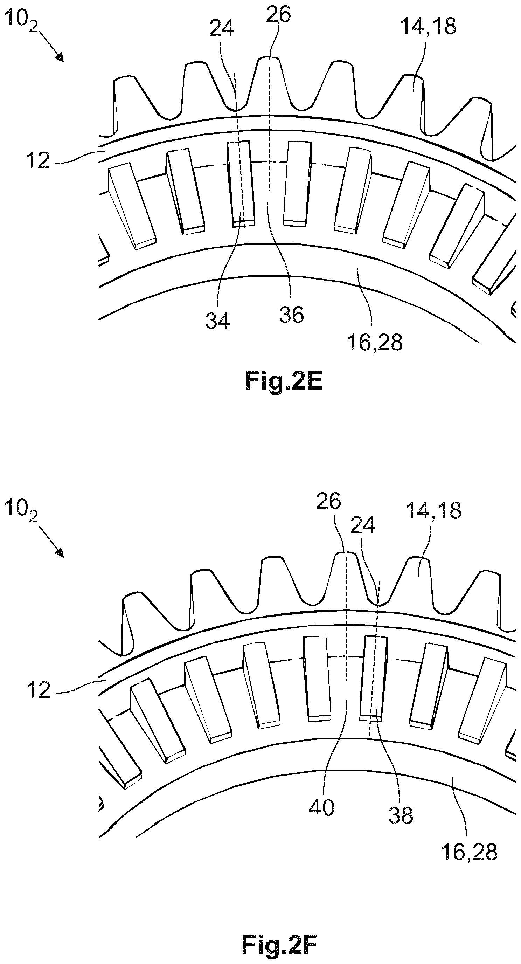

In den Figuren 2A bis 2F ist ein zweites Ausführungsbeispiel des Trägerteils 10₂ anhand von verschiedenen Ausführungsbeispielen dargestellt. Das Trägerteil 10₂ nach dem ersten Ausführungsbeispiel gleicht zu weiten Teilen dem Trägerteil nach dem ersten Ausführungsbeispiel 10₁. Wie insbesondere aus den Figuren 2E und 2F hervorgeht, sind die ersten Rippen 34 und die zweiten Rippen 38 fluchtend zu den Zahnfüßen 24 ausgerichtet. Entsprechend sind die ersten Taschen 36 und die zweiten Taschen 40 fluchtend zu den Zahnköpfen 26 ausgerichtet. Nicht dargestellt ist eine Ausführungsform, bei welcher die ersten Rippen 34 und die zweiten Rippen 38 fluchtend zu den Zahnköpfen 26 ausgerichtet sind. Bei Schrägverzahnungen sind die ersten Rippen 34 und die zweiten Rippen 38 abhängig vom Schrägungswinkel um die Drehachse A gedreht angeordnet.

Entsprechendes gilt für die ersten Taschen 36 und die zweiten Taschen 40.

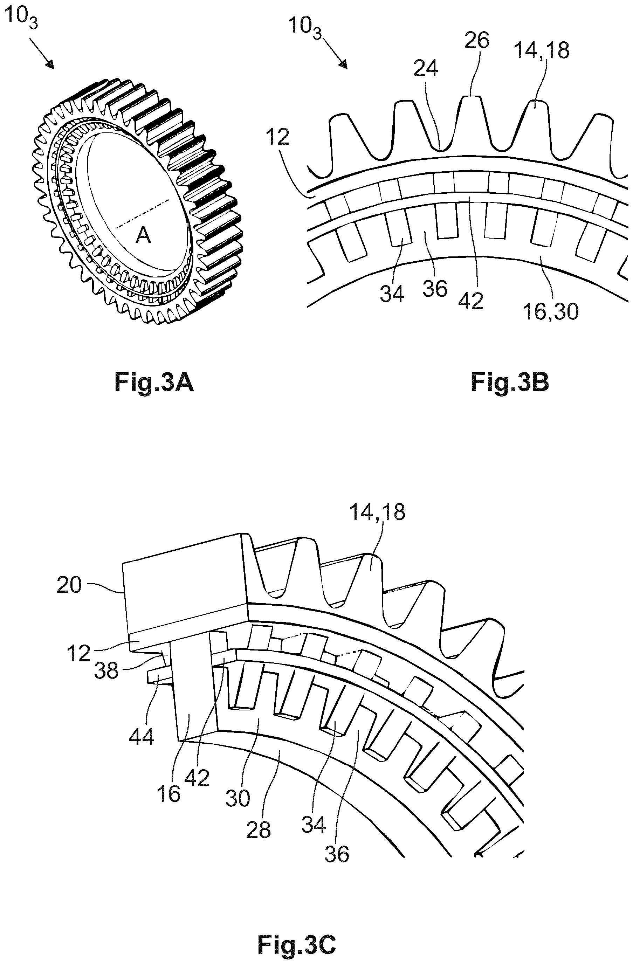

In den Figuren 3A bis 3C ist ein drittes Ausführungsbeispiel des Trägerteils 10₃ anhand von verschiedenen Darstellungen gezeigt. Auf der ersten Fortsatz-Stirnfläche 30 ist eine ringförmige erste Wandung 42 angeordnet, welche die ersten Rippen 34 und die ersten Taschen 36 in jeweils einen radial inneren Abschnitt und jeweils einen radial äußeren Abschnitt unterteilt. Auf der zweiten Fortsatz-Stirnfläche 32 ist eine ringförmige zweite Wandung 44 angeordnet, welche die zweiten Rippen 38 und die zweiten Taschen 40 in jeweils einen radial inneren Abschnitt und jeweils einen radial äußeren Abschnitt unterteilt.

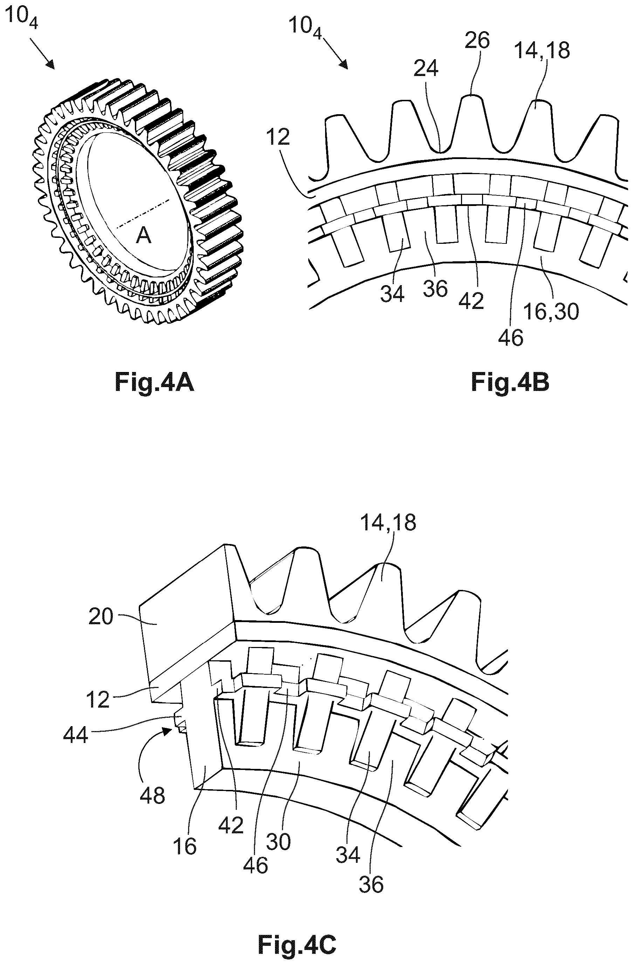

In den Figuren 4A bis 4C ist ein viertes Ausführungsbeispiel des Trägerteils 10₄ anhand von verschiedenen Darstellungen gezeigt. Im vierten Ausführungsbeispiel des erfindungsgemäßen Trägerteils 10₄ weist die erste Wandung 42 erste Vertiefungen 46 und die zweite Wandung 44 zweite Vertiefungen 48 auf, die fluchtend mit den ersten Taschen 36 bzw. mit den zweiten Taschen 40 angeordnet sind. Die Wandungen 42, 44 folgen somit in etwa den Rippen 34, 38 und den Taschen 36, 40. Wie insbesondere aus den Figuren 3B und 4B hervorgeht, sind auch beim dritten und vierten Ausführungsbeispiel des Trägerteils 10₃, 10₄ die Taschen 36, 40 in radialer Richtung gesehen fluchtend mit den Zahnköpfen 26 der jeweiligen Zähne 22 ausgerichtet.

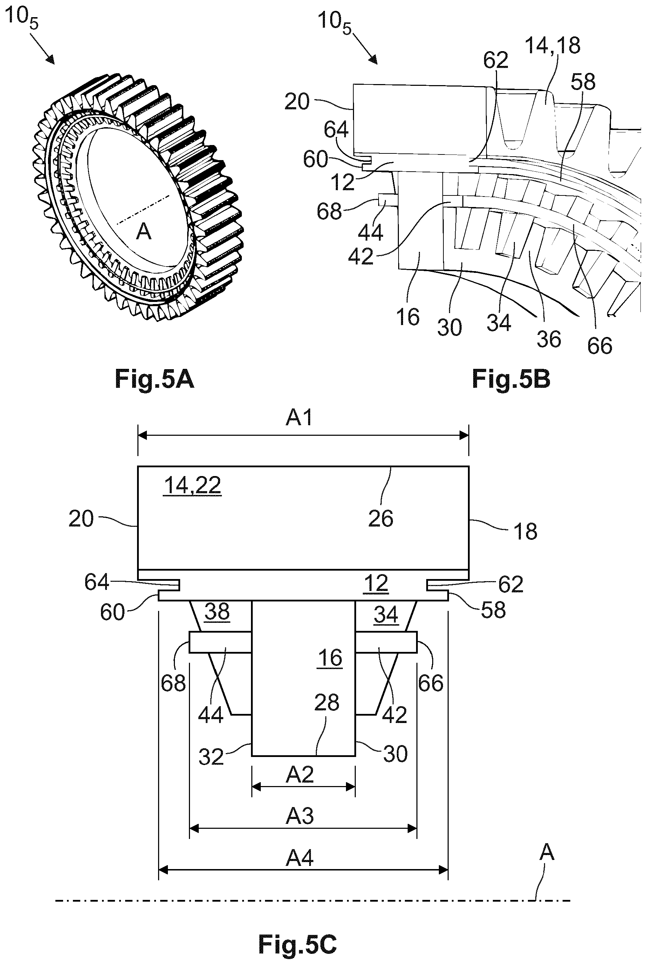

In den Figuren 5A bis 5C ist ein fünftes Ausführungsbeispiel des Zahnkranzträgerteils 10₅ anhand von verschiedenen Darstellungen gezeigt. Der Kreisringabschnitt 12 weist eine erste Kreisringabschnitt-Stirnfläche 58 und eine zweite Kreisringabschnitt-Stirnfläche 60 auf. Die erste Kreisringabschnitt-Stirnfläche 58 ist genauso ausgerichtet wie die erste Zahnkranz-Stirnfläche 18 und die zweite Kreisringabschnitt-Stirnfläche 60 ist genauso ausgereichtet wie die zweite Zahnkranz-Stirnfläche 20. Auf der ersten Kreisringabschnitt-Stirnfläche 58 ist eine erste Kreisringabschnitt-Tasche 62 und auf der zweiten Kreisringabschnitt-Stirnfläche ist eine zweite Kreisringabschnitt-Tasche 64 angeordnet. Die erste Kreisringabschnitt-Tasche 62 und die zweite Kreisringabschnitt-Tasche 64 sind ringförmig ausgestaltet und weisen einen gleichbleibenden Durchmesser auf.

Die erste Wandung 42 weist eine erste Wandungsstirnfläche 66 und die zweite Wandung 44 eine zweite Wandungsstirnfläche 68 auf. Die erste Wandungsstirnfläche 66 und die zweite Wandungsstirnfläche 68 sind in einem dritten Abstand A3 voneinander angeordnet. Die erste Kreisringabschnitt-Stirnfläche 58 und die zweite Kreisringabschnitt-Stirnfläche 60 sind in einem vierten Abstand A4 voneinander angeordnet (siehe Figur 5C). Dabei gelten folgende Bedingungen: A1 > A3, A4 > A2.

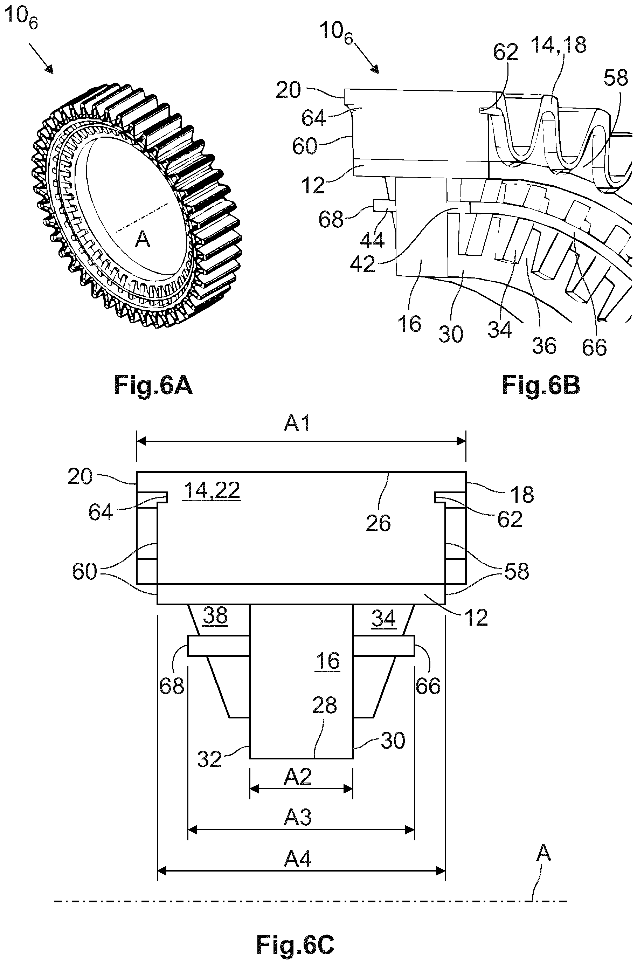

In den Figuren 6A bis 6C ist ein sechstes Ausführungsbeispiel des Zahnkranzträgerteils 10₆ anhand von verschiedenen Darstellungen gezeigt. Das Zahnkranzträgerteil 10₆ nach dem sechsten Ausführungsbeispiel gleicht weitgehend dem Zahnkranzträgerteil 10₅ nach dem fünften Ausführungsbeispiel. Allerdings verläuft die erste Kreisringabschnitt-Tasche 62 nicht nur auf der ersten Kreisringabschnitt-Stirnfläche 58, sondern auch abschnittsweise in der ersten Zahnkranz-Stirnfläche 18 hin zu den Zahnköpfen 26. Entsprechend verläuft die zweite Kreisringabschnitt-Tasche 64 abschnittsweise in der zweiten Zahnkranz-Stirnfläche 20. Wie insbesondere aus der Figur 6B hervorgeht, weisen die erste Kreisringabschnitt-Tasche 62 und die zweite Kreisringabschnitt-Tasche 64 einen wellenförmigen Verlauf auf.

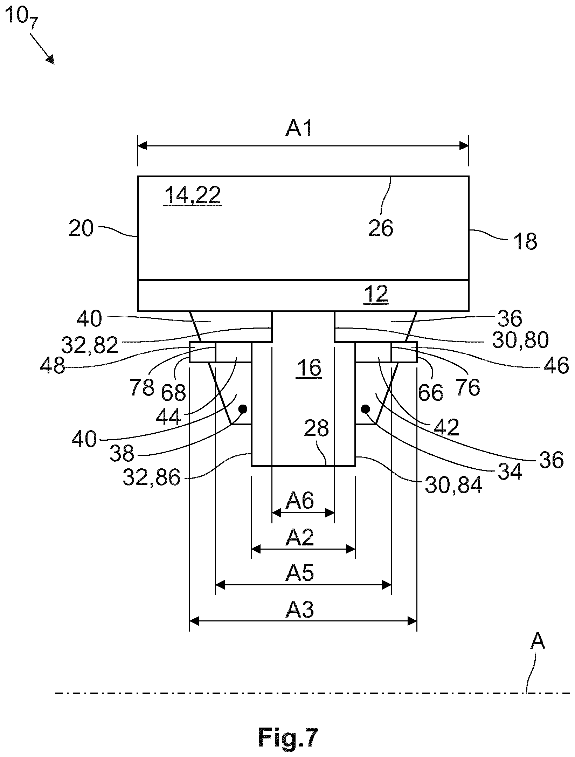

In Figur 7 ist ein siebtes Ausführungsbeispiel des Zahnkranzträgerteils 10₇ anhand einer Schnittdarstellung analog zu den Darstellungen der Figuren 1C, 5C und 6C dargestellt. Das siebte Ausführungsbeispiel des Zahnkranzträgerteils 10₇ gleicht weitgehend dem in den Figuren 4A bis 4C dargestellten vierten Ausführungsbeispiel des erfindungsgemäßen Zahnkranzträgerteils 10₄, insbesondere weisen die erste Wandung 42 und die zweite Wandung 44 die ersten Vertiefungen 46 bzw. die zweiten Vertiefungen 48 auf. Die ersten Vertiefungen 46 weisen jeweils eine erste Vertiefungsstirnfläche 76 und die zweiten Vertiefungen 48 eine zweite Vertiefungsstirnfläche 78 auf, die entlang der Drehachse A in einem fünften Abstand A5 voneinander angeordnet sind. Dabei ist der fünfte Abstand A5 größer als der oder gleich dem zweiten Abstand A2, in welchem die erste Fortsatz-Stirnfläche 30 und die zweite Fortsatz-Stirnfläche 32 beabstandet voneinander angeordnet sind, mathematisch ausgedrückt also A5 ≥ A2.

Wie erwähnt, unterteilen die Wandungen 42, 44 die erste Tasche 36 und die zweite Tasche 40 beim dritten, vierten, fünften und sechsten Ausführungsbeispiel des Zahnkranzträgerteils 103 - 106 in einen radial äußeren Abschnitt und einen radial inneren Abschnitt. Dabei erheben sich die Wandungen 42, 44 von der ersten Fortsatz-Stirnfläche 30 bzw. von der zweiten Fortsatz-Stirnfläche 32, die durchgehend im zweiten Abstand A2 zueinander angeordnet sind.

Im siebten Ausführungsbeispiel jedoch weisen die erste Fortsatz-Stirnfläche 30 und die zweite Fortsatz-Stirnfläche 32 jeweils einen erzeugten Versatz auf. Infolgedessen weisen die erste Tasche 36 im radial äußeren Abschnitt eine erste äußere Taschengrundfläche 80 und die zweite Tasche 40 im radial äußeren Abschnitt eine zweite äußere Taschengrundfläche 82 auf, die in einem sechsten Abstand A6 bezogen auf die Drehachse A voneinander angeordnet sind. Entsprechend weisen die erste Fortsatz-Stirnfläche 30 im radial inneren Abschnitt eine radial innere erste Taschengrundfläche 84 und die zweite Fortsatz-Stirnfläche 32 im radial inneren Abschnitt als eine radial innere zweite Taschengrundfläche 86 auf, die jedoch weiter im zweiten Abstand A2 voneinander angeordnet sind. Der oben erwähnte Versatz der ersten Fortsatz-Stirnfläche 30 und der zweiten Fortsatz-Stirnfläche 32 liegt in der ersten Wandung 42 bzw. der zweiten Wandung 44.

Während im dritten, vierten, fünften und sechsten Ausführungsbeispiel des Zahnkranzträgerteils 10₃ - 10₆ der Abstand A6 gleich dem Abstand A2 ist, ist im siebten Ausführungsbeispiel des erfindungsgemäßen Zahnkranzträgerteils 10₇ der sechste Abstand A6 geringer als der zweite Abstand A2.

Mathematisch ausgedrückt gilt die folgende Beziehung: A6 ≥ A2.

Der fünfte Abstand A5 ist jedoch größer als der zweite Abstand A2 oder gleich dem zweiten Abstand A2, da ansonsten die erste Tasche 36 und die zweite Tasche 40 keinen radial äußeren Abschnitt bilden würden. Mathematisch ausgedrückt gilt A5 ≥ A2.

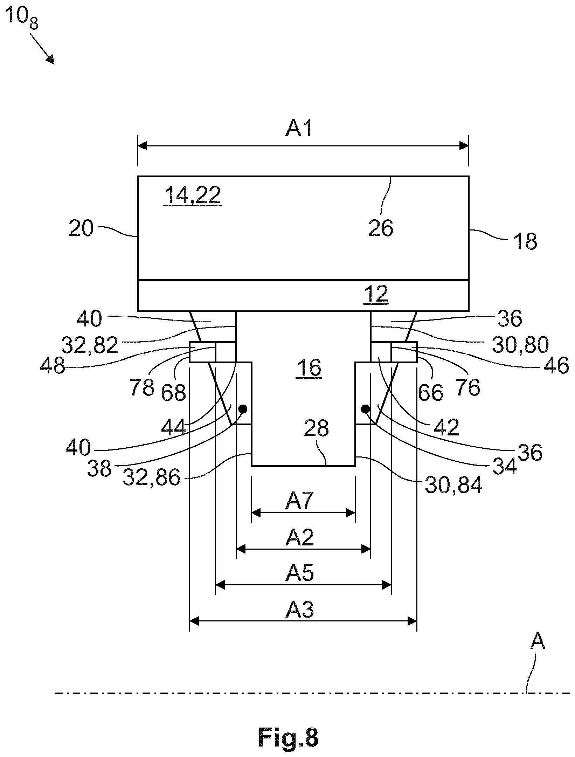

In Figur 8 ist ein achtes Ausführungsbeispiel des Zahnkranzträgerteils 10₈ dargestellt. In diesem Ausführungsbeispiel sind die erste äußere Taschengrundfläche 80 und eine zweite äußere Taschengrundfläche 82 im zweiten Abstand A2 bezogen auf die Drehachse A voneinander angeordnet, während die radial innere erste Taschengrundfläche 84 und die radial innere zweite Taschengrundfläche 86 in einem siebten Abstand A7 angeordnet sind. Dabei ist der siebte Abstand A7 geringer als der zweite Abstand A2. Mathematisch ausgedrückt gilt: A2 ≥ A7, wobei A5 ≥ A2, wie auch im siebten Ausführungsbeispiel. Figur 9 zeigt eine ausschnittsweise Draufsicht auf ein neuntes Ausführungsbeispiel des erfindungsgemäßen Zahnkranzträgerteils 10₉. Der Kreisringabschnitt 12 bildet im neunten Ausführungsbeispiel des erfindungsgemäßen Zahnkranzträgerteils 10₉ einen wellenförmigen Übergang 74 zu den ersten Rippen 34 und den ersten Taschen 36. Auch zu den zweiten Rippen 38 und den zweiten Taschen 40 bildet der Kreisringabschnitt 12 einen wellenförmigen Übergang (nicht dargestellt).

Bezugnehmend auf die in den Figuren 1 bis 8 dargestellten acht Ausführungsbeispiele ist anzumerken, dass die ersten Rippen 34 und die zweiten Rippen 38 ebene oder nahezu Oberflächen aufweisen. In radialer Richtung gesehen weisen sie einen im Wesentlichen rechteckigen Querschnitt auf und bilden daher Kanten. Die ersten Taschen 36 und die zweiten Taschen 40 sind im Wesentlichen eben. Aus der Figur 9 ist zu entnehmen, dass im neunten Ausführungsbeispiel 10₉ die ersten Rippen 34 und die hier nicht erkennbaren zweiten Rippen 38 gewölbte Oberflächen aufweisen und daher keine Kanten bilden. Die ersten Taschen 36 und die in Figur 9 nicht sichtbaren zweiten Taschen sind eben, können aber gewölbt sein.

Vergleicht man die erste Vertiefung 46 der ersten Wandung 42 des in Figur 9 dargestellten neunten Ausführungsbeispiels des erfindungsgemäßen Zahnkranzträgerteils 10₉ mit der ersten Vertiefung der in Figur 4C dargestellten Wandung 42, so ist zu erkennen, dass die Vertiefung 46 des neunten Ausführungsbeispiels gewölbte Oberflächen aufweist, währen die Vertiefung 46 des vierten Ausführungsbeispiels ausschließlich ebene Flächen umfasst.

In Figur 10 ist ein Mehrkomponenten-Zahnrad 11, in diesem Fall ein Dreikomponenten-Zahnrad 11 anhand einer Seitenansicht gezeigt, welches als ein Stirnrad 52 ausgeführt ist. Eine Ausführung des Mehrkomponenten-Zahnrads 11 als Schraubrad oder Schneckenrad (nicht dargestellt), ist ebenfalls denkbar. Das Dreikomponenten-Zahnrad 11 umfasst ein Zahnkranzträgerteil 10 nach einem der zuvor diskutierten Ausführungsbeispiele, an dessen Kreisringabschnitt 12 radial außen ein Zahnkranz 14 angeordnet ist. In diesem Fall ist ein Verbindungsteil 50 radial einwärts vom Zahnkranzträgerteil 10 angeordnet und mit diesem derart verbunden, dass es den Fortsatz 16 umschließt. Weiterhin umfasst das Dreikomponenten-Zahnrad 11 ein Einlegeteil 54, welches radial einwärts vom Verbindungsteil 50 angeordnet und mit diesem verbunden ist. Das Einlegeteil 54 bildet eine Nabe 56, mit dem das Stirnrad 52 mit einer hier nicht dargestellten Welle oder dergleichen verbunden werden kann.

Aufgrund der Gestaltung des Zahnkranzträgerteils 10 ergibt sich für das beim Einspritzen flüssige Material ein Strömungsweg, der zu einer deutlich gleichmäßigeren Befüllung der Spritzgussform führt als es bei Zahnkranzträgerteilen der Fall ist, die beispielsweise aus der US 2014/007724 A1 bekannt sind. Folglich wird die Ausbildung von Überströmkanälen reduziert und es wird die Homogenität des vorschlagsgemäßen Zahnkranzträgerteils erhöht. Die mechanische Belastbarkeit des erfindungsgemäßen Zahnkranzträgerteils 10 wird gegenüber bekannten Zahnkranzträgerteilen erhöht. Die Verformung des Zahnkranzträgerteils 10 infolge von axial und/oder radial wirkenden Kräften wird reduziert, so dass einem Ablösen des Zahnkranzträgerteils 10 vom Verbindungsteil 50 infolge derartiger Verformungen entgegengewirkt wird. Einem derartigen Ablösen wird auch mit den Wandungen 42, 44 und den Kreisringabschnitt-Taschen 62, 64 entgegengewirkt, welche einen in radialer Richtung wirkenden Formschluss bereitstellen.

Weiterhin stellen die Rippen 34, 38 und die Taschen 36, 40 einen in Umfangsrichtung wirkenden Formschluss zwischen dem Zahnkranzträgerteil 10 und dem Verbindungsteil 50 bereit, wodurch sich das zwischen dem Zahnkranzträgerteil 10 und dem Verbindungsteil 50 übertragbare Drehmoment steigern lässt.

### Bezugszeichenliste

- 10: Zahnkranzträgerteil
- 10₁ bis 10₉: Zahnkranzträgerteil
- 11: Mehrkomponenten-Zahnrad
- 12: Kreisringabschnitt
- 14: Zahnkranz
- 16: Fortsatz
- 18: erste Zahnkranz-Stirnfläche
- 20: zweite Zahnkranz-Stirnfläche
- 22: Zähne
- 24: Zahnfuß
- 26: Zahnkopf
- 28: Innenfläche
- 30: erste Fortsatz-Stirnfläche
- 32: zweite Fortsatz-Stirnfläche
- 34: erste Rippe
- 36: erste Tasche
- 38: zweite Rippe
- 40: zweite Tasche
- 42: erste Wandung
- 44: zweite Wandung
- 46: erste Vertiefung
- 48: zweite Vertiefung
- 50: Verbindungsteil
- 52: Stirnrad
- 54: Einlegeteil
- 56: Nabe
- 58: erste Kreisringabschnitt-Stirnfläche
- 60: zweite Kreisringabschnitt-Stirnfläche
- 62: erste Kreisringabschnitt-Tasche
- 64: zweite Kreisringabschnitt-Tasche
- 66: erste Wandungsstirnfläche
- 68: zweite Wandungsstirnfläche
- 74: wellenförmiger Übergang
- 76: erste Vertiefungsstirnfläche
- 78: zweite Vertiefungsstirnfläche
- 80: erste äußere Taschengrundfläche
- 82: zweite äußere Taschengrundfläche
- 84: erste innere Taschengrundfläche
- 86: zweite innere Taschengrundfläche

- A: Drehachse
- A1: erster Abstand
- A2: zweiter Abstand
- A3: dritter Abstand
- A4: vierter Abstand
- A5: fünfter Abstand
- A6: sechster Abstand
- A7: siebter Abstand

- Df: Fußkreisdurchmesser
- Di: Innendurchmesser
- Dk: Kopfkreisdurchmesser

## Patentansprüche

1. Zahnkranzträgerteil (10) für ein Zwei- oder Mehrkomponenten-Zahnrad (11), wobei
- das Zahnkranzträgerteil (10)
o einen in Umfangsrichtung um eine Drehachse (A) umlaufenden Kreisringabschnitt (12),
o einen radial außen am Kreisringabschnitt (12) angeordneten Zahnkranz (14), und
o einen sich vom Kreisringabschnitt (12) radial nach innen erstreckenden Fortsatz (16),
- der Fortsatz (16)
o eine erste Fortsatz-Stirnfläche (30) und eine zweite Fortsatz-Stirnfläche (32) aufweist,
o auf der ersten Fortsatz-Stirnfläche (30) eine Anzahl von ersten Rippen (34) und eine gleiche Anzahl von ersten Taschen (36), und/oder
o auf der zweiten Fortsatz-Stirnfläche (32) eine Anzahl von zweiten Rippen (38) und eine gleiche Anzahl von zweiten Taschen (40) angeordnet sind,
o die ersten Rippen (34) und die ersten Taschen (36) und/oder die zweiten Rippen (38) und die zweiten Taschen (40) jeweils radial verlaufen und in Umfangsrichtung benachbart zueinander angeordnet sind
**dadurch gekennzeichnet, dass** die ersten Rippen (34) und die ersten Taschen (36) und/oder die zweiten Rippen (38) und die zweiten Taschen (40) mit dem Kreisringabschnitt (12) jeweils einen wellenförmigen Übergang (74) bilden.

2. Zahnkranzträgerteil (10) nach Anspruch 1,
**dadurch gekennzeichnet, dass** auf dem Zahnkranz (14) eine Anzahl von Zähnen (22) angeordnet ist, die gleich der Anzahl der ersten Rippen (34) und zweiten Rippen (38) sowie der Anzahl der ersten Taschen (36) und zweiten Taschen (40) ist.

3. Zahnkranzträgerteil (10) nach Anspruch 2, **dadurch gekennzeichnet, dass**
- jeder Zahn des Zahnkranzes (14) jeweils einen Zahnfuß (24) und einen Zahnkopf (26) bildet und
- die ersten und zweiten Rippen (34, 38) fluchtend zu den Zahnfüßen (24) und die ersten und zweiten Taschen (36, 40) fluchtend zu den Zahnköpfen (26), oder
- die ersten und zweiten Rippen (34, 38) fluchtend zu den Zahnköpfen (26) und die ersten und zweiten Taschen (36, 40) fluchtend zu den Zahnfüßen (24) angeordnet sind.

4. Zahnkranzträgerteil (10) nach einem der vorherigen Ansprüche,
**dadurch gekennzeichnet, dass**
- auf der ersten Fortsatz-Stirnfläche (30) zumindest eine ringförmige erste Wandung (42), welche die ersten Rippen (34) und die ersten Taschen (36) in jeweils einen radial inneren Abschnitt und jeweils einen radial äußeren Abschnitt unterteilt und/oder
- auf der zweiten Fortsatz-Stirnfläche (32) zumindest eine ringförmige zweite Wandung (44) angeordnet ist, welche die zweiten Rippen (38) und die zweiten Taschen (40) in jeweils einen radial inneren Abschnitt und jeweils einen radial äußeren Abschnitt unterteilt.

5. Zahnkranzträgerteil (10) nach Anspruch 4,
**dadurch gekennzeichnet, dass**
- die erste Wandung (42) erste Vertiefungen (46) aufweist, welche fluchtend mit den ersten Taschen (36) angeordnet sind und/oder
- die zweite Wandung (44) zweite Vertiefungen (48) aufweist, welche fluchtend mit den zweiten Taschen (40) angeordnet sind.

6. Zahnkranzträgerteil (10) nach einem der vorherigen Ansprüche,
**dadurch gekennzeichnet, dass**
- der Zahnkranz (14) eine erste Zahnkranz-Stirnfläche (18) und eine zweite Zahnkranz-Stirnfläche (20) aufweist, die in einem ersten Abstand (A1) voneinander angeordnet sind, und
- die erste Fortsatz-Stirnfläche (30) und die zweite Fortsatz-Stirnfläche (32) in einem zweiten Abstand (A2) voneinander angeordnet sind,
- wobei das Verhältnis 1 < A1/A2 < 10, vorzugsweise 2 < A1/A2 < 5 beträgt.

7. Zahnkranzträgerteil (10) nach den Ansprüchen 5 und 6, **dadurch gekennzeichnet, dass**
- die ersten Vertiefungen (46) eine erste Vertiefungsstirnfläche (76) und
- die zweiten Vertiefungen (48) eine zweite Vertiefungsstirnfläche (78) aufweisen, wobei
- die erste Vertiefungsstirnfläche (76) und die zweite Vertiefungsstirnfläche (78) in einem fünften Abstand (A5) voneinander beabstandet sind, wobei
- A5 ≥ A2.

8. Zahnkranzträgerteil (10) nach den Ansprüchen 4 und 6, **dadurch gekennzeichnet, dass**
- die ersten Taschen (36) im radial äußeren Abschnitt eine erste äußere Taschengrundfläche (80) und die zweiten Taschen (40) im radial äußeren Abschnitt eine zweite äußere Taschengrundfläche (82) aufweisen, die im einem sechsten Abstand (A6) voneinander angeordnet sind, wobei A2 ≥ A6, oder
- die ersten Taschen (36) im inneren äußeren Abschnitt eine erste innere Taschengrundfläche (84) und die zweiten Taschen (40) im radial inneren Abschnitt eine zweite innere Taschengrundfläche (86) aufweisen, die im einem siebten Abstand (A7) voneinander angeordnet sind, wobei A2 ≥ A7.

9. Zahnkranzträgerteil (10) nach einem der vorherigen Ansprüche,
**dadurch gekennzeichnet, dass**
- der Zahnkranz (14) einen Kopfkreisdurchmesser (Dk) und einen Fußkreisdurchmesser (Df) aufweist und
- der Fortsatz (16) eine zur Drehachse (A) hinweisende Innenfläche (28) mit einem Innenflächendurchmesser (Di) aufweist,
- wobei das Verhältnis Df/Di > 1 beträgt.

10. Zahnkranzträgerteil (10) nach einem der vorherigen Ansprüche,
**dadurch gekennzeichnet, dass**
- der Kreisringabschnitt (12) eine erste Kreisringabschnitt-Stirnfläche (58) und eine zweite Kreisringabschnitt-Stirnfläche (60) aufweist,
- auf der ersten Kreisringabschnitt-Stirnfläche (58) zumindest eine erste Kreisringabschnitt-Tasche (62), und/oder
- auf der zweiten Kreisringabschnitt-Stirnfläche (60) zumindest eine zweite Kreisringabschnitt-Tasche (64) angeordnet ist.

11. Zahnkranzträgerteil (10) nach Anspruch 10,
**dadurch gekennzeichnet, dass** die erste Kreisringabschnitt-Tasche (62) und/oder die zweite Kreisringabschnitt-Tasche (64)
- ringförmig ausgestaltet sind und einen gleichbleibenden Durchmesser aufweisen oder
- einen wellenförmigen Verlauf aufweisen.

12. Zahnkranzträgerteil (10) nach Anspruch 11,
**dadurch gekennzeichnet, dass**
- die erste Kreisringabschnitt-Tasche (62) einen wellenförmigen Verlauf aufweist und zumindest abschnittsweise in der ersten Zahnkranz-Stirnfläche (18) verläuft und/oder
- die zweite Kreisringabschnitt-Tasche (64) einen wellenförmigen Verlauf aufweist und zumindest abschnittsweise in der zweiten Zahnkranz-Stirnfläche (20) verläuft.

13. Zahnkranzträgerteil (10) nach den Ansprüchen 4 und 10 oder Zahnkranzträgerteil (10) nach den Ansprüchen 4 und 10 und einem der Ansprüche 11 oder 12,
**dadurch gekennzeichnet, dass**
- die erste Wandung (42) eine erste Wandungsstirnfläche (66) und die zweite Wandung (44) eine zweite Wandungsstirnfläche (68) aufweisen, die in einem dritten Abstand (A3) voneinander angeordnet sind,
- die erste Kreisringabschnitt-Stirnfläche (58) und die zweite Kreisringabschnitt-Stirnfläche (60) in einem vierten Abstand (A4) voneinander angeordnet sind, wobei
- A1 > A3 und/oder A4 > A2 sind.

14. Zwei- oder Mehrkomponenten-Zahnrad (11), umfassend
- ein Zahnkranzträgerteil (10) nach einem der vorherigen Ansprüche, und
- ein formschlüssig mit dem Zahnkranzträgerteil (10) verbundenes Verbindungsteil (50), wobei das Verbindungsteil (50)
∘ den Fortsatz (16) oder
∘ den Fortsatz (16) und den Kreisringabschnitt (12) umschließt, oder
∘ den Fortsatz (16) und den Kreisringabschnitt (12) und den Zahnkranz (14) im Bereich der ersten Kreisringabschnitt-Stirnfläche (58) und der zweiten Kreisringabschnitt-Stirnfläche (60) sowie der ersten Kreisringabschnitt-Tasche (62) und der zweiten Kreisringabschnitt-Tasche (64) umschließt.

15. Zwei- oder Mehrkomponenten-Zahnrad (11) nach Anspruch 14,
**dadurch gekennzeichnet, dass** das Zwei- oder Mehrkomponenten-Zahnrad (11), als ein Stirnrad (52), ein Schraubrad oder ein Schneckenrad ausgestaltet ist.

16. Zwei- oder Mehrkomponenten-Zahnrad (11), nach einem der Ansprüche 14 oder 15,
**dadurch gekennzeichnet, dass** das Zwei- oder Mehrkomponenten-Zahnrad (11), ein Einlegeteil (54) umfasst, welches mit dem Verbindungsteil (50) verbunden ist und vom Verbindungsteil (50) umschlossen wird.

## Claims

1. Rim gear carrier part (10) for a two or more component gear wheel (11), wherein
- the rim gear carrier part (10) comprises
∘ an annular ring segment (12), extending around an axis of rotation (A) in circumferential direction,
∘ a rim gear (14), arranged radially on the outside of the annular ring segment (12), and
∘ an extension (16), extending radially inwards from the annular ring segment (12),
- the extension (16) comprises
∘ a first extension end face (30) and a second extension end face (32),
∘ numerous first ribs (34) and an identical number of first pockets (36) are arranged on the first extension end face (30), and/or
∘ numerous second ribs (38) and an identical number of second pockets (40) are arranged on the second extension end face (320),
∘ each of the first ribs (34) and the first pockets (36) and/or each of the second ribs (38) and the second pockets (40) extend radially and are arranged adjacent to each other in circumferential direction,
**characterized in that** each of the first ribs (34) and the first pockets (36) and/or each of the second ribs (38) and the second pockets (40) form, with the annular ring segment (12), a respective wave-like transition (74).

2. Rim gear carrier part (10) in accordance with claim 1,
**characterized in that**, on the rim gear (14), numerous teeth (22) are arranged which are identical in number to the number of first ribs (34) and of second ribs (38), as well as to the number of first pockets (36) and of second pockets (40).

3. Rim gear carrier part (10) in accordance with claim 2,
**characterized in that**
- each tooth of the rim gear (14) forms a respective tooth root (24) and tooth tip (26), and
- the first and second ribs (34, 38) are arranged in alignment with the with the tooth roots (24) and the first and the second pockets (36, 40) are arranged in alignment with the tooth tips (26), or
- the first and second ribs (34, 38) are arranged in alignment with the with the tooth tips (26) and the first and the second pockets (36, 40) are arranged in alignment with the tooth roots (24).

4. Rim gear carrier part (10) in accordance with any of the preceding claims,
**characterized in that**
- on the first extension end face (30), at least one first annular wall (42) is arranged, which divides the first ribs (34) and the first pockets (36) into a respective radially inner segment and into a respective radially outer segment, and/or
- on the second extension end face (32), at least one second annular wall (44) is arranged, which divides the second ribs (38) and the second pockets (40) into a respective radially inner segment and into a respective radially outer segment.

5. Rim gear carrier part (10) in accordance with claim 4,
**characterized in that**
- the first wall (42) comprises first recesses (46), which are arranged in alignment with the first pockets (36), and/or
- the second wall (44) comprises second recesses (48), which are arranged in alignment with the second pockets (40).

6. Rim gear carrier part (10) in accordance with any of the preceding claims,
**characterized in that**
- the rim gear (14) comprises a first rim gear end face (18) and a second rim gear end face (20), which are arranged at a first distance to each other (A1), and
- the first extension end face (30) and the second extension end face (32) are arranged at a second distance (A2) to each other,
- wherein the ratio is 1 < A1/A2 < 10, preferably 2 < A1/A2 < 5.

7. Rim gear carrier part (10) in accordance with claims 5 and 6,
**characterized in that**
- the first recesses (46) comprise a first recess end face (76) and
- the second recesses (48) comprise a second recess end face (78), wherein
- the first recess end face (76) and the second recess end face (78) are arranged at a fifth distance (A5) to each other, wherein
- A5 ≥ A2.

8. Rim gear carrier part (10) in accordance with claims 4 and 6,
**characterized in that**
- the first pockets (36) comprise, in the radially outer segment, a first outer pocket bottom surface (80) and the second pockets (40) comprise, in the radially outer segment, a second outer pocket bottom surface (82), which are arranged at a sixth distance(A6) to each other, wherein A2 ≥ A6, or
- the first pockets (36) comprise, in the radially inner segment, a first inner pocket bottom surface (84) and the second pockets (40) comprise, in the radially inner segment, a second inner pocket bottom surface (86), which are arranged at a seventh distance (A7) to each other, wherein A2 ≥ A7.

9. Rim gear carrier part (10) in accordance with any of the preceding claims,
**characterized in that**
- the rim gear (14) comprises a tip circle diameter (Dk) and a root circle diameter (Df) and
- the extension (16) comprises an inner surface (28) which faces the axis of rotation (A) and which has an inner surface diameter (Di),
- wherein the ratio is Df/Di > 1.

10. Rim gear carrier part (10) in accordance with any of the preceding claims,
**characterized in that**
- the annular ring segment (12) comprises a first annular ring segment end face (58) and a second annular ring segment end face (60),
- at least one first annular ring segment pocket (62) is arranged on the first annular ring segment end face (58), and/or
- at least one second annular ring segment pocket (64) is arranged on the second annular ring segment end face (60).

11. Rim gear carrier part (10) in accordance with claim 10,
**characterized in that** the first annular ring segment pocket (62) and/or the second annular ring segment pocket (64)
- are implemented in an annular shape and comprise a consistent diameter, or
- comprise a wave-like progression.

12. Rim gear carrier part (10) in accordance with claim 10,
**characterized in that**
- the first annular ring segment pocket (62) comprises a wave-like progression and extends, at least in segments, in the first rim gear end face (18), and/or
- the second annular ring segment pocket (64) comprises a wave-like progression and extends, at least in segments, in the second rim gear end face (20).

13. Rim gear carrier part (10) in accordance with the claims 4 and 10 or rim gear carrier part (10) in accordance with the claims 4 and 10 and either of claims 11 or 12,
**characterized in that**
- the first wall (42) comprises a first wall end face (66), and the second wall (44) comprises a second wall end face (68), which are arranged at a third distance (A3) to each other,
- the first annular ring segment end face (58) and the second annular ring segment end face (60) are arranged at a fourth distance (A4) to each other, wherein
- A1 > A3 and/or A4 > A2.

14. Two or more component gear wheel (11), comprising
- a rim gear carrier part (10) in accordance with any of the preceding claims, and
- a connection part (50), positively connected to the rim gear carrier part (10), wherein the connection part (50) includes
∘ the extension (16) or
∘ the extension (16) and the annular ring segment (12), or includes
∘ the extension (16) and the annular ring segment (12) and the rim gear (14) in the region of the first annular ring segment end face (58) and of the second annular ring segment end face (60), as well as of the first annular ring segment pocket (62) and the second annular ring segment pocket (64).

15. Two or more component gear wheel (11) in accordance with claim 14,
**characterized in that** the two or more component gear wheel (11) is implemented as a spur gear (52), a helical gear or as a worm gear.

16. Two or more component gear wheel (11) in accordance with either of claims 14 or 15, **characterized in that** the two or more component gear wheel (11) includes an insertion part (54) which is connected to the connection part (50) and which is encompassed by the connection part (50).

## Revendications

1. Pièce de support de couronne dentée (10) d'une roue dentée (11) à deux ou plusieurs composants dans laquelle
- la pièce de support de couronne dentée (10) comprend
* un premier segment d'anneau circulaire (12) entourant un axe de rotation (A) dans la direction périphérique,
* une couronne dentée (14) radialement à l'extérieur du segment d'anneau circulaire (12), et
* un prolongement (16) s'étendant radialement vers l'intérieur à partir du segment d'anneau circulaire (12),
- le prolongement (16),
* comporte une première surface frontale de prolongement (30) et une seconde surface frontale de prolongement (32),
* la première surface frontale de prolongement (30) comporte un nombre de premières nervures (34) et le même nombre de premières cavités (36), et/ou
* la seconde surface frontale de prolongement (32) a un nombre de secondes nervures (38) et le même nombre de secondes cavités (40),
* les premières nervures (34) et les premières cavités (36) et/ou les secondes nervures (38) et les secondes cavités (40) sont disposées chaque fois radialement et de façon voisine dans la direction périphérique, pièce de support **caractérisée en ce que**
les premières nervures (34) et les premières cavités (36) et/ou les secondes nervures (38) et les secondes cavités (40) forment respectivement une transition ondulée (74) avec le segment d'anneau circulaire (12).

2. Pièce de support de couronne dentée (10) selon la revendication 1,
**caractérisée en ce que**
la couronne dentée (14) comporte un nombre de dents (22) égal au nombre de premières nervures (34) et de secondes nervures (38) ainsi qu'au nombre de premières cavités (36) et de secondes cavités (40).

3. Pièce de support de couronne dentée (10) selon la revendication 2,
**caractérisée en ce que**
- chacune des dents de la couronne dentée (14) forme un pied de dent (24) et une tête de dent (26), et
- les premières et secondes nervures (34, 38) sont alignées sur les pieds de dent (24) et les premières et secondes cavités (36, 40) sont alignées sur les têtes de dent (26), ou
- les premières et secondes nervures (34, 38) sont alignées sur les têtes de dent (26) et les premières et secondes cavités (36, 40) sont alignées sur les pieds de dents (24).

4. Pièce de support de couronne dentée (10) selon l'une des revendications précédentes,
**caractérisée en ce que**
- la première surface frontale de prolongement (30) comporte au moins une première paroi (42) de forme annulaire qui subdivise les premières nervures (34) et les premières cavités (36) respectivement en une partie radiale intérieure et en une partie radiale extérieure, et/ou
- la seconde surface frontale de prolongement (32), a au moins une seconde paroi annulaire (44) qui subdivise les premières nervures (38) et les secondes cavités (40) respectivement en une partie radiale intérieure et une partie radiale extérieure.

5. Pièce de support de couronne dentée (10) selon la revendication 4,
**caractérisée en ce que**
- la première paroi (42) a des premiers creux (46) alignés sur les premières cavités (36), et/ou
- la seconde paroi (44) a des seconds creux (48) alignés sur les secondes cavités (40).

6. Pièce de support de couronne dentée (10) selon l'une des revendications précédentes,
**caractérisée en ce que**
- la couronne dentée (14) a une première surface frontale de couronne dentée (18) et une seconde surface frontale de couronne dentée (20) qui sont écartées d'une première distance (A1), et
- la première surface frontale de prolongement (30) et la seconde surface frontale de prolongement (32) sont écartées d'une seconde distance (A2),
- le rapport (A1/A2) étant tel que 1<A1/A2<10, de préférence tel que 2<A1/A2<5.

7. Pièce de support de couronne dentée (10) selon l'une des revendications 5 à 6,
**caractérisée en ce que**
- les premiers creux (46) ont une première surface frontale en creux (76), et
- les seconds creux (48) ont une seconde surface frontale en creux (78),
- la première surface frontale en creux (76) et la seconde surface frontale en creux (78) étant écartées l'une de l'autre d'une cinquième distance (A5), telle que
A5≥A2.

8. Pièce de support de couronne dentée (10) selon les revendications 4 et 6,
**caractérisée en ce que**
- les premières cavités (36) ont, dans la partie radiale extérieure, une première surface de base extérieure de cavité (80) et les secondes cavités (40) ont en coupe radiale extérieure, une seconde surface de base extérieure de cavité (82) qui sont séparées l'une de l'autre d'une sixième distance (A6), telle que A2≥A6 ou
- les premières cavités (36) ont dans la partie radiale extérieure une première surface de base intérieure de cavité (84) et les secondes cavités (40) ont dans la partie radiale intérieure, une seconde surface intérieure de cavité (86) qui sont écartées d'une septième distance (A7), telle que A2≥A7.

9. Pièce de support de couronne dentée (10) selon l'une des revendications précédentes,
**caractérisée en ce que**
- la couronne dentée (14) a un diamètre de tête (Dk) et un diamètre de pied (Df), et
- le prolongement (16) a une surface intérieure (28) tournée vers l'axe de rotation (A) de diamètre de surface intérieure (Di), et
- le rapport est Df/Di>1.

10. Pièce de support de couronne dentée (10) selon l'une des revendications précédentes,
**caractérisée en ce que**
le segment d'anneau circulaire (12) a une première surface frontale de segment d'anneau circulaire (58) et une seconde surface frontale de segment d'anneau de cercle (60),
- la première surface frontale de segment d'anneau circulaire (58) a au moins une première cavité de segment d'anneau circulaire (62), et/ou
* la seconde surface frontale de segment annulaire (60) a au moins une seconde cavité de segment annulaire (64).

11. Pièce de support de couronne dentée (10) selon la revendication 10,
**caractérisée en ce que**
la première cavité de segment d'anneau circulaire (62) et/ou la seconde cavité de segment d'anneau circulaire (64),
- sont de forme annulaire et ont un diamètre constant, ou
- ont un tracé ondulé.

12. Pièce de support de couronne dentée (10) selon la revendication 11,
**caractérisée en ce que**
- la première cavité de segment d'anneau circulaire (62) a un tracé ondulé et au moins par segments elle est dans la première surface frontale annulaire (18) et/ou la seconde cavité de segment d'anneau circulaire (64) a un tracé ondulé et au moins par segments elle est dans la seconde surface frontale d'anneau circulaire (20).

13. Pièce de support de couronne dentée (10) selon l'une des revendications 4 et 10 ou pièce de support de couronne dentée (10) selon les revendications 4 et 10 ou l'une des revendications 11 ou 12,
**caractérisée en ce que**
la première paroi (42) a une première surface frontale de paroi (66) et la seconde paroi (44) a une seconde surface frontale de paroi (68) qui sont écartées d'une troisième distance (A3),
- la première surface frontale de segment d'anneau circulaire (58) et la seconde surface frontale de segment d'anneau circulaire (60) sont écartées d'une quatrième distance (A4),
répondant aux relations : A1>A3 et/ou A4>A2.

14. Roue dentée à deux ou plusieurs composants (11) comprenant
- une pièce de support de couronne dentée (10) selon l'une des revendications précédentes, et
- une pièce de liaison (50) reliée par une liaison par la forme à la pièce de support de couronne dentée (10),
la pièce de liaison (50) :
* entourant le prolongement (16), ou
* entourant le prolongement (16) et le segment d'anneau circulaire (12), ou
* entourant le prolongement (16) et le segment d'anneau circulaire (12), et la couronne dentée (14) dans la région de la première surface frontale de segment d'anneau circulaire (58) et la seconde surface frontale de segment d'anneau circulaire (60) ainsi que la première cavité de segment d'anneau circulaire (62) et la seconde cavité de segment d'anneau circulaire (64).

15. Roue dentée à deux ou plusieurs composants (11) selon la revendication 14,
**caractérisée en ce que**
la roue dentée à deux ou plusieurs composants (11) est réalisée sous forme de roue droite (52), de roue à dents hélicoïdales ou de roue à vis.

16. Roue dentée à deux ou plusieurs composants (11) selon l'une des revendications 14 ou 15,
**caractérisée en ce que**
la roue dentée à deux ou plusieurs composants (11) comprend un insert (54) relié à la pièce de liaison (50) et entourée par la pièce de liaison (50).
